# EUROPEAN PATENT APPLICATION

(11) **EP 4 542 883 A1**
(43) Date of publication of application: **23.04.2025**
(21) Application number: 24205584.6
(22) Date of filing: 09.10.2024
(51) Int. Cl.: H04B 17/24, H04L 5/00

(54) **METHOD FOR SOUNDING REFERENCE SIGNAL TRANSMISSION ASSOCIATED WITH USER EQUIPMENT REPORTED RESOURCES**

(30) Priority: 20.10.2023 FI 20236174
(71) Applicant: Nokia Technologies Oy, 02610 Espoo (FI)
(72) Inventor: KOSKELA, Timo, Oulu (FI); KARJALAINEN, Juha Pekka, Sotkamo (FI); HAKOLA, Sami-Jukka, Kempele (FI)
(74) Representative: Nokia EPO representatives

(57) **Abstract**

An apparatus comprising at least one processor; and at least one memory storing instructions that, when executed by the at least one processor, cause the apparatus at least to perform: receiving a configuration from a network including associating an amount N of downlink reference signals to the network, wherein a downlink reference signal reported to the network is indicative to the network that the apparatus is capable to transmit the sounding reference signal associated with the reported downlink reference signal; determining up to N downlink reference signals to be reported based on at least one criterion; reporting up to N downlink reference signals to the network; receiving a command to trigger the sounding reference signal transmission; and transmitting the up to N sounding reference signals respectively associated with the reported up to N downlink reference signals to the network.

## Description

### TECHNICAL FIELD

The present invention relates to beam reporting procedures.

### BACKGROUND

Beam Management defines a set of functionalities to assist a user equipment (UE) to set its reception and transmission (RX/TX) beams for downlink receptions and uplink transmissions, respectively. In 3GPP New Radio (NR), the beam management for both downlink and uplink is network controlled, including triggering of the beam reports from the UE.

A new carrier frequency range for 7-20 GHz is planned to be introduced in the next generation (6G) networks. The operation of the new carrier frequency range can be considered as a mix of Frequency Range 1 (0-6 GHz) and Frequency Range 2 (24-71 GHz). Due to possible usage of new bands, larger antenna arrays may be needed to cope additional path loss and penetration loss compared to operation below 6 GHz bands. New bands may also enable larger bandwidths to be used compared to NR. To enable efficient utilization of larger bandwidths and large antenna arrays, analog or hybrid digital-analog beamforming architectures may be viable options for UE implementation for new bands. When UEs are operating with antenna arrays and analog beamforming, combined beam management procedures for the gNB and UE beam alignment are required.

### SUMMARY

Now, an improved method and technical equipment implementing the method has been invented, by which the above problems are alleviated. Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising means for receiving a configuration from a network including associating an amount N of downlink reference signals respectively with N sounding reference signals; means for determining up to N downlink reference signals to be reported based on at least one criterion; means for reporting up to N downlink reference signals to the network, wherein a downlink reference signal reported to the network is indicative to the network that the apparatus is capable to transmit the sounding reference signal associated with the reported downlink reference signal; means for receiving a command to trigger sounding reference signal transmission; and means for transmitting the up to N sounding reference signals respectively associated with the reported up to N downlink reference signals to the network in response to receiving the command.

An apparatus according to a second aspect comprises: at least one processor and at least one memory storing instructions that, when executed by the at least one processor, cause the apparatus at least to perform receiving a configuration from a network including associating an amount N of downlink reference signals respectively with N sounding reference signals; determining up to N downlink reference signals to be reported based on at least one criterion; reporting up to N downlink reference signals to the network, wherein a downlink reference signal reported to the network is indicative to the network that the apparatus is capable to transmit the sounding reference signal associated with the reported downlink reference signal; receiving a command to trigger sounding reference signal transmission; and transmitting the up to N sounding reference signals respectively associated with the reported up to N downlink reference signals to the network in response to receiving the command.

A method according to a third aspect comprises receiving a configuration from a network including associating an amount N of downlink reference signals respectively with N sounding reference signals; determining up to N downlink reference signals to be reported based on at least one criterion; reporting up to N downlink reference signals to the network, wherein a downlink reference signal reported to the network is indicative to the network that the apparatus is capable to transmit the sounding reference signal associated with the reported downlink reference signal; receiving a command to trigger sounding reference signal transmission; and transmitting the up to N sounding reference signals respectively associated with the reported up to N downlink reference signals to the network in response to receiving the command.

An apparatus according to a fourth aspect comprises means for determining an amount N of downlink reference signals to be reported by a user equipment for a sounding reference signal transmission; means for transmitting to the user equipment an indication to associate N downlink reference signals respectively with N sounding reference signals; means for receiving a report of up to N downlink reference signals from the user equipment, wherein a reported downlink reference signal is indicative to the network that the apparatus is capable to transmit sounding reference signal associated with the reported downlink reference signal; means for transmitting a command to the user equipment to trigger the sounding reference signal transmission; means for receiving the up to N sounding reference signals respectively associated with the reported up to N downlink reference signals from the user equipment; and means for measuring and analyzing the received signals.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Fig. 1 shows a schematic block diagram of an apparatus for incorporating a beam distribution arrangement according to the embodiments;
Fig. 2 shows schematically a layout of an apparatus according to an example embodiment;
Fig. 3 shows a part of an exemplifying radio access network;
Fig. 4 shows an example of radio beam alignment procedure between the gNB and the UE for both reception and transmission (Rx/Tx);
Fig. 5 shows a signaling diagram between the UE and the network during the SRS procedure, in accordance with an embodiment;
Fig. 6 shows a flow chart for a beam reporting procedure according to an embodiment; and
Fig. 7 shows a flow chart for a beam reporting procedure according to another embodiment.

### DETAILED DESCRIPTON OF SOME EXAMPLE EMBODIMENTS

Based on the above discussion, a beam reporting procedure that could enable a faster link switch and provide the network with additional information for scheduling would be of interest.

The following describes in further detail suitable apparatus and possible mechanisms carrying out the beam distribution. While the following focuses on 5G networks, the embodiments as described further below are by no means limited to be implemented in said networks only, but they are applicable in any network supporting beam distribution.

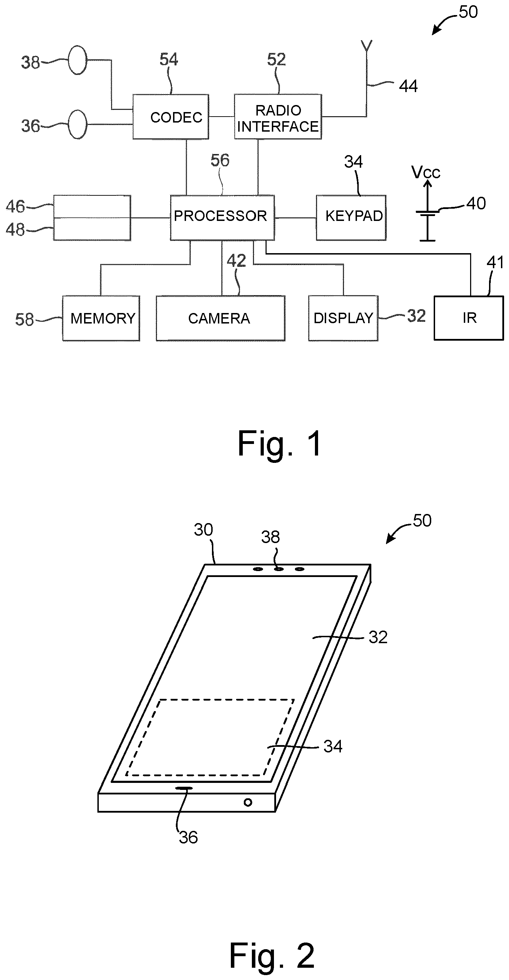

In this regard, reference is first made to Figs. 1 and 2, where Fig. 1 shows a schematic block diagram of an exemplary apparatus or electronic device 50, which may incorporate the arrangement according to the embodiments. Fig. 2 shows a layout of an apparatus according to an example embodiment. The elements of Figs. 1 and 2 will be explained next.

The electronic device 50 may for example be a mobile terminal or user equipment of a wireless communication system. The apparatus 50 may comprise a housing 30 for incorporating and protecting the device. The apparatus 50 further may comprise a display 32 and a keypad 34. Instead of the keypad, the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, such as anyone of: an earpiece 38, speaker, or an analogue audio or digital audio output connection. The apparatus 50 may also comprise a battery 40 (or the device may be powered by any suitable mobile energy device such as solar cell, fuel cell or clockwork generator). The apparatus may further comprise a camera 42 capable of recording or capturing images and/or video. The apparatus 50 may further comprise an infrared port 41 for short range line of sight communication to other devices. In other embodiments the apparatus 50 may further comprise any suitable short-range communication solution such as for example a Bluetooth wireless connection or a USB/firewire wired connection.

The apparatus 50 may comprise a processor 56 for controlling the apparatus 50. The processor 56 may be connected to memory 58 which may store both user data and instructions for implementation on the processor 56. The memory may be a random access memory (RAM) and/or a read only memory (ROM). The memory may store instructions such as computer-readable, computer-executable software that, when executed by the processor, cause the apparatus to perform various functions described herein. In some cases, the instructions may not be directly executable by the processor but may cause a computer (e.g., when compiled and executed) to perform functions described herein. The processor 56 may further be connected to codec circuitry 54 suitable for carrying out coding and decoding of audio and/or video data or assisting in coding and decoding carried out by the processor.

The apparatus 50 may comprise radio interface circuitry 52 connected to the processor and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In the following, different exemplifying embodiments will be described using, as an example of an access architecture to which the embodiments may be applied, a radio access architecture based on Long Term Evolution Advanced (LTE Advanced, LTE-A) or new radio (NR, 5G), without restricting the embodiments to such an architecture, however. A person skilled in the art appreciates that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet protocol multimedia subsystems (IMS) or any combination thereof.

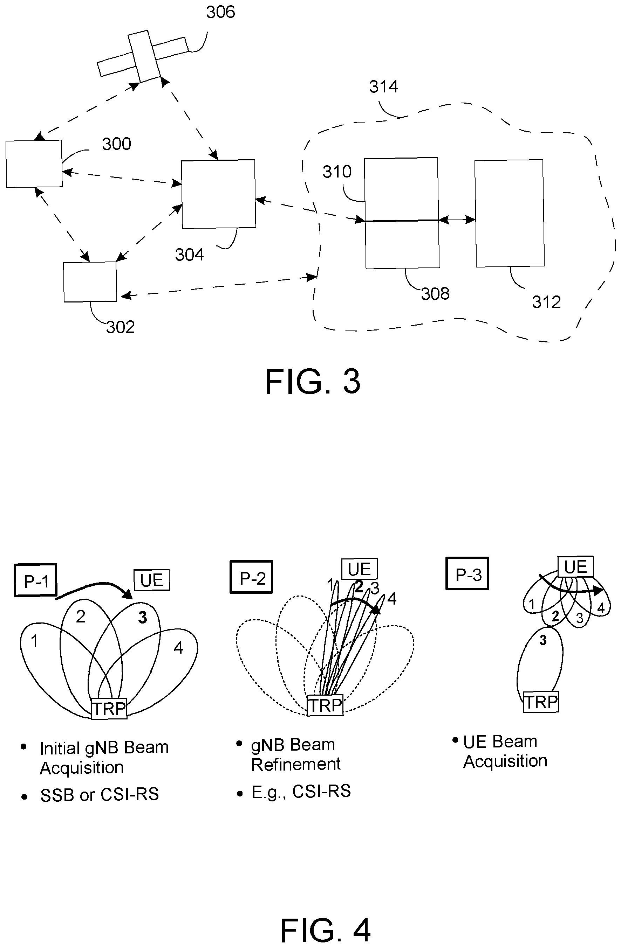

Fig. 3 depicts examples of simplified system architectures only showing some elements and functional entities, all being logical units, whose implementation may differ from what is shown. The connections shown in Fig. 3 are logical connections; the actual physical connections may be different. It is apparent to a person skilled in the art that the system typically comprises also other functions and structures than those shown in Fig. 3. The embodiments are not, however, restricted to the system given as an example but a person skilled in the art may apply the solution to other communication systems provided with necessary properties.

The example of Fig. 3 shows a part of an exemplifying radio access network.

Fig. 3 shows user devices 300 and 302 configured to be in a wireless connection on one or more communication channels in a cell with an access node (such as (e/g)NodeB) 304 providing the cell, wherein (e/g)NodeB stands for an eNodeB or a gNodeB or a node that is capable of being both. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access and Mobility Management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an IoT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the UEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of e.g. hundreds of antenna elements, implemented in a single antenna panel or in a plurality of antenna panels, capable of using a plurality of simultaneous radio beams for communication with the UE. The UEs may be provided with MIMO antennas having an antenna array consisting of e.g. dozens of antenna elements, implemented in a single antenna panel or in a plurality of antenna panels. Thus, the UE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced e.g. via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 3 by "cloud" 314). The communication system may also comprise a central control entity, or the like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU) and non-real time functions being carried out in a centralized manner (in a centralized unit, CU 308).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize non-terrestrial nodes 306, e.g. access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

The Radio Resource Control (RRC) protocol is used in various wireless communication systems for defining the air interface between the UE and a base station, such as eNB/gNB. This protocol is specified by 3GPP in in TS 36.331 for LTE and in TS 38.331 for 5G. In terms of the RRC, the UE may operate in LTE and in 5G in an idle mode or in a connected mode, wherein the radio resources available for the UE are dependent on the mode where the UE at present resides. In 5G, the UE may also operate in inactive mode. In the RRC idle mode, the UE has no connection for communication, but the UE is able to listen to page messages. In the RRC connected mode, the UE may operate in different states, such as CELL_DCH (Dedicated Channel), CELL_FACH (Forward Access Channel), CELL_PCH (Cell Paging Channel) and URA_PCH (URA Paging Channel). The UE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states is controlled by a state machine of the RRC. When the UE is powered up, it is in a disconnected mode/idle mode. The UE may transit to RRC connected mode with an initial attach or with a connection establishment. If there is no activity from the UE for a short time, eNB/gNB may suspend its session by moving to RRC Inactive and can resume its session by moving to RRC connected mode. The UE can move to the RRC idle mode from the RRC connected mode or from the RRC inactive mode.

The actual user and control data from network to the UEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a UE to access the 5G network.

The user and control data from UE to the network is transmitted via uplink physical channels, which in 5G include Physical Uplink Control Channel (PUCCH), which is used for uplink control information including HARQ feedback acknowledgments, scheduling request, and downlink channel-state information for link adaptation, Physical Uplink Shared Channel (PUSCH), which is used for uplink data transmission, and Physical Random Access Channel (PRACH), which is used by the UE to request connection setup referred to as random access.

For the 5G technology, one of the most important design goals has been improved metrics of reliability and latency, in addition to network resilience and flexibility.

Especially when considering the operating of the UE in the Frequency Range 2 (FR2; 24.25 GHz to 52.6 GHz) including the mmWave range, the UE implementation is expected to have multiple antenna panels (Multi-Panel UE, MPUE) to perform beam steering over a large solid angle aiming to maximize the reliability.

Beam Management defines a set of functionalities to assist the UE to set its reception and transmission (RX/TX) beams for downlink receptions and uplink transmissions, respectively. In NR, the beam management for both downlink and uplink is network controlled, including triggering of the beam reports from the UE. The functionalities of the beam management can be categorized roughly according to four groups:
1. Beam Indication
   - Assist the UE to set its RX and TX beam properly for the reception of DL and transmission of UL, respectively.
2. Beam Acquisition, Measurements and Reporting
   - Procedures for providing the gNB knowledge about feasible DL and UL beams for the UE.
3. Beam Recovery
   - For rapid link reconfiguration against sudden blockages, i.e. fast re-alignment of the gNB and the UE beams.
4. Beam Tracking and Refinement
   - Set of procedures to refine the gNB and the UE side beams.

Regarding downlink beam management and especially for Beam Acquisition, Measurements and Reporting, the following beam management procedures P-1, P-2 and P-3 as identified in Fig. 4 are supported within one or multiple TRPs of the serving cell:
a) P-1 is used to enable UE measurement on different TRP Tx beams to support selection of TRP Tx beams/UE Rx beam(s)
   - For beamforming at TRP, it typically includes an intra/inter-TRP Tx beam sweep from a set of different beams (illustrated with the arrow). For beamforming at UE, it typically includes a UE Rx beam sweep from a set of different beams. In the example of Fig. 4, the beam number 3 is selected.
b) P-2 is used to enable UE measurement on different TRP Tx beams to possibly change inter/intra-TRP Tx beam(s)
   - P-2 may be performed from a possibly smaller set of beams for beam refinement than in P-1. It is noted that P-2 can be a special case of P-1.
c) P-3 is used to enable UE measurement on the same TRP Tx beam to change UE Rx beam in the case UE uses beamforming. In the example of Fig. 4, the beam number 3 at the TRP side and the beam number 2 at the UE side are selected.

Regarding downlink beam indication, a quasi-colocation (QCL) indication functionality has been defined. The principle to receive certain physical signal or physical channel is: the UE is either configured with or the UE implicitly determines a source/reference signal (RS) that UE has received and measured earlier, which defines how to set RX beam for the reception of the downlink (target) physical signal or channel to be received. To provide the UE with QCL characteristics for the target signal (to be received), a Transmission Coordination Indication (TCI) framework has been defined using which the UE can be configured with TCI state(s) so as to provide the UE with source reference signal(s) (RS) for determining QCL characteristics. Each TCI state includes one or two source RSs that provide the UE QCL with TypeA, TypeB, TypeC and/or TypeD parameters. Different types provide the parameters as follows:
- QCL-TypeA: {Doppler shift, Doppler spread, average delay, delay spread}
- QCL-TypeB: {Doppler shift, Doppler spread}
- QCL-TypeC: {Doppler shift, average delay}
- QCL-TypeD: {Spatial Rx parameter}

In uplink, the UE is provided with a parameter called spatial relation info providing a spatial source RS, based on which the UE determines the uplink transmit beam. The spatial source RS can be DL RS (SSB or CSI-RS) or UL RS (Sounding Reference Signal, SRS). For each PUCCH and SRS resource, the gNB provides explicitly spatial source while for PUSCH, an indirect indication is provided:
- PUSCH scheduled using DCI format 0_0, the spatial source is the same as with a certain PUCCH resource
- PUSCH scheduled using DCI format 0_1, the spatial source is the same as indicated SRS resource(s)
   ∘ One SRS resource indicated in codebook based transmission scheme
   ∘ One or multiple SRS resources indicated in non-codebook based transmission scheme

3GPP Release 16 (Rel16) introduced a default spatial relation for dedicated PUCCH/SRS (except SRS with usage = 'beamManagement' and SRS with usage = 'nonCodeBook' and configured with associated CSI-RS) where, if the spatial relation is not configured in FR2, the UE determines the spatial source as follows:
- In case when CORESET(s) are configured on the CC, the spatial source is the TCI state / QCL assumption of the CORESET with the lowest ID.
- In case when any CORESETs are not configured on the CC, the spatial source is the activated TCI state with the lowest ID applicable to PDSCH in the active DL-BWP of the CC.

Rel16 further introduced a default spatial relation for PUSCH scheduled by DCI format 0_0 where the UE determines the spatial relation as follows:
- when there is no PUCCH resources configured on the active UL BWP CC:
   ∘ The default spatial relation is the TCI state / QCL assumption of the CORESET with the lowest ID.
   ∘ The default pathloss RS is the QCL-TypeD RS of the same TCI state / QCL assumption of the CORESET with the lowest ID.
- when there is no PUCCH resources configured on the active UL BWP CC in FR2 and in RRC-connected mode:
   ∘ The default spatial relation is the TCI state / QCL assumption of the CORESET with the lowest ID.

The default pathloss RS is the QCL-TypeD RS of the same TCI state / QCL assumption of the CORESET with the lowest ID.

Rel17 introduced a unified TCI framework, meaning that the TCI states used so far for providing QCL assumptions for the reception of DL signals and channels would also be used to provide spatial sources for the transmission of UL signals and channels to determine UL TX spatial filter. Furthermore, the unified TCI framework defines the concept of indicated TCI state, meaning that one or multiple (in case of multi-TRP for instance) of the configured TCI states is/are indicated TCI state(s) at a time. The indicated TCI state can be joint DL and UL TCI state or separate DL and separate UL TCI states. The indicated TCI state provides QCL source (DL) and spatial source (UL) for the set of downlink signals and channels and for the set of uplink signals and channels, respectively. According to Rel17, there can be one indicated joint DL and UL TCI state, or one indicated DL TCI state and one indicated UL TCI state for the UE.

Rel18 further extends the unified TCI framework so that there can be multiple indicated DL and UL TCI states.

Beam reporting is to provide UE measurement results on a set of (e.g. best/highest quality) DL RSs representing beam reference signals to the network. That is based on which gNB/network makes decisions about the used beam pair link for both downlink and uplink. The UE can be configured to report either L1-RSRP (Layer 1 - reference signal received power) or L1-SINR (Layer 1 - signal-to-interference-plus-noise ratio) value(s) for the reported DL RS(s). The reporting can be periodic, semi-persistent or aperiodic reporting triggered by the gNB via DCI command on PDCCH.

In accordance with an approach, the beam reporting may include transmission of sounding reference signals. This may be performed, for example, in four phases. In a first phase the UE is configured for SRS by gNB. In this phase the gNB determines about SRS configuration (e.g, SRS physical resources, usage, report period timing etc) and notifies the configuration to UE via RRC messages (e.g, RRCSetup, RRCReconfiguration). The SRS configuration is provided to the UE by the gNB, and it may vary depending on the cell's conditions and traffic requirements.

In a second phase the UE transmits the SRS to the gNB. The SRS is a predefined signal with known characteristics, at a specific time and frequency. The UE may send the SRS periodically or aperiodically, as instructed by the gNB, on the uplink (UL) channel.

In a third phase the gNB receives the SRS and measures and analyzes the received signal. The gNB estimates the channel state information (CSI) by comparing the received SRS with the known reference signal. The gNB evaluates various parameters, such as the path loss, propagation delay (phase delay), and received signal strength, to understand the current radio environment and channel conditions between the gNB and the UE.

In a fourth phase the gNB may utilize the SRS. Once the gNB has estimated the channel state based on the SRS, it uses this information to optimize its resource allocation and scheduling decisions. This can involve adjusting transmission parameters (such as modulation and coding schemes) or selecting the most appropriate MIMO settings to enhance the overall system capacity and improve the user experience.

NR Rel-17 specification provides support for single user DL PDSCH scheduling up to 8 layers (i.e. rank 8). However, Rel-15 UL SRS resource configuration with antenna switching can provide only support for UEs equipped with 4 RX antenna ports. In other words, even though a UE is equipped with 8 RX antenna ports, only four out of eight antenna ports can be used for DL CSI acquisition at gNB-side based UL SRS sounding. Clearly, this leads to suboptimal use of potential merits of DL TX precoding as well as RX processing limiting system performance e.g. in terms of spectral efficiency and interference mitigation.

NR Rel-17 supports the following SRS time domain behaviors; periodic, semi-persistent, and aperiodic transmissions. With semi-persistent SRS transmission, MAC-CE are used to activate and deactivate a semi-persistent set of one or more SRS resources. While activated, semi-persistent UL SRS resource is transmitted with a configured periodicity and slot offset. As a result of this, more dynamic on/off control is enabled compared to periodic SRS resources which are configured only by RRC signaling.

In Rel-17, depending on reported UE's antenna-switching capability, the UE can be configured with the higher layer parameter usage in SRS-ResourceSet set as 'antennaSwitching', the UE may be configured with only one of the following configurations depending on the indicated UE capability supportedSRS-TxPortSwitch ('t1r2' for 1T2R, 't1r1-t1r2' for 1T=1R/1T2R, 't2r4' for 2T4R, 'tlr4' for 1T4R, 'tlr6' for 1T6R, 't1r8' for 1T8R, 't2r6' for 2T6R, 't2r8' for 2T8R, 't4r8' for 4T8R, 't1r1-t1r2-t1r4' for 1T=1R/1T2R/1T4R, 't1r4- t2r4' for 1T4R/2T4R, 't1r1-t1r2-t2r2-t2r4' for 1T=1R/1T2R/2T=2R/2T4R, 't1r1-t1r2-t2r2-t1r4-t2r4' for 1T=1R/1T2R/2T=2R/1T4R/2T4R, 't1r1' for T=1R, 't2r2' for 2T=2R, 't1r1-t2r2' for 1T=1R/2T=2R, 't4r4' for 4T=4R, or 't1r1-t2r2-t4r4' for 1T=1R/2T=2R/4T=4R), where T and R define the number of transmission antenna ports and reception antenna ports at the UE-side, respectively. The indicated UE antenna switching capability of 'xTyR' corresponds to a UE, capable of SRS transmission on 'x' antenna ports over total of 'y' antennas, where 'y' corresponds to all or subset of UE receive antennas.

The UE is configured with a guard period of Y symbols, in which the UE does not transmit any other signal, in the case the SRS resources of a set are transmitted in the same slot. The guard period is in-between the SRS resources of the set. For two SRS resource sets of an antenna switching located in two consecutive slots, if UE is capable of transmitting SRS in all symbols in one slot, a guard period of Y symbols exists between the last OFDM symbol occupied by the SRS resource set in the first slot and the first OFDM symbol occupied by the SRS resource set in the second slot.

For the inter-set guard period, the UE does not transmit any other signal on any symbols of the interval if the interval between SRS resource sets is Y symbols.
- When both the SRS resource on all of the corresponding symbols prior to the gap and the SRS resource on all of the corresponding symbols after the gap are dropped due to collision handling, the gap period is also dropped with the same priority and can be used for UL transmission.

The UE shall expect to be configured with the same number of SRS ports for all SRS resources in the SRS resource set(s) with higher layer parameter usage set as 'antennaSwitching'.

For 1T2R, 1T4R or 2T4R, or 1T6R or 1T8R, 2T6R, 2T8R, 4T8R, the UE shall not expect to be configured or triggered with more than one SRS resource set with higher layer parameter usage set as 'antennaSwitching' in the same slot. For 1T=1R, 2T=2R or 4T=4R, the UE shall not expect to be configured or triggered with more than one SRS resource set with higher layer parameter usage set as 'antennaSwitching' in the same symbol.

Rel-17 specification defines the way how antenna ports for the UL SRS resource are configured with repetition and without SRS frequency hopping as: When frequency hopping within an SRS resource in each slot is not configured (R=Ns), each of the antenna ports of the SRS resource in each slot is mapped in all the Ns symbols to the same set of subcarriers in the same set of PRBs, where the R is an SRS repetition factor.

When frequency hopping within an SRS resource in each slot is configured without repetition (R=1), according to the SRS hopping parameters SRS B , SRS C and hop b defined in clause 6.4.1.4 of TS 3 8.211, each of the antenna ports of the SRS resource in each slot is mapped to different sets of subcarriers in each OFDM symbol, where the same transmission comb value is assumed for different sets of subcarriers. When both frequency hopping and repetition within an SRS resource in each slot are configured (*Ns* ≥ *4, R* ≥ *2*), each of the antenna ports of the SRS resource in each slot is mapped to the same set of subcarriers within each set of R adjacent OFDM symbols, and frequency hopping across the *Ns*, *R* sets is according to the SRS hopping parameters S *SRS B* , *SRS C* and *hop b* , where *Ns* should be divisible by *R*.

The RRC 38.331, in srs-config defines the SRS resource set as follows and SRS resource as follows:

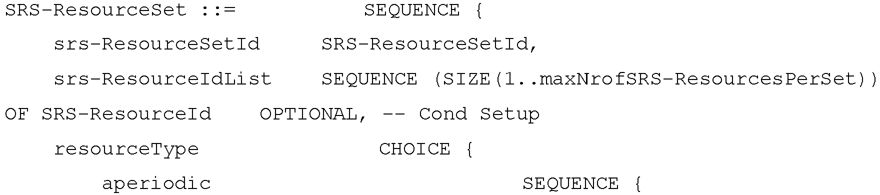

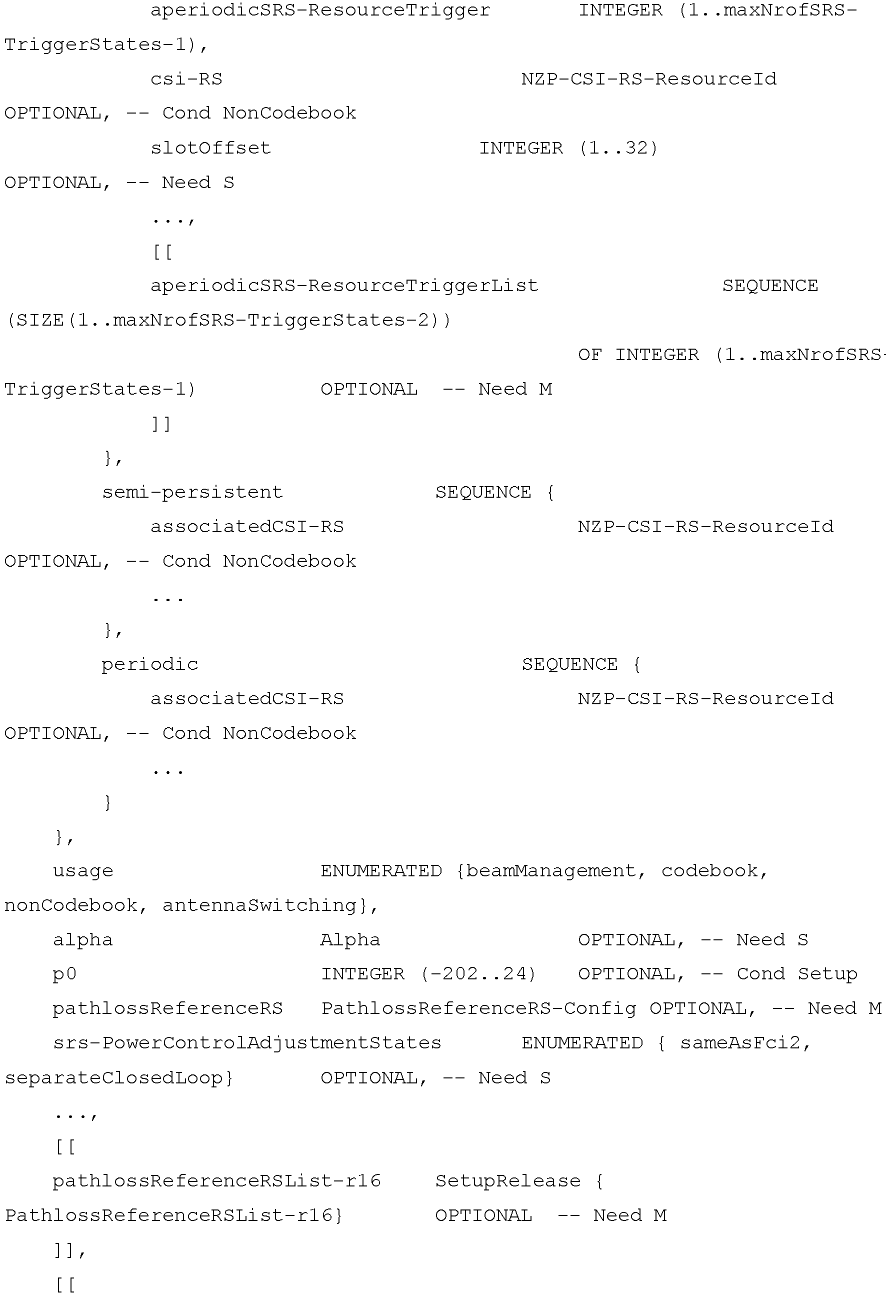

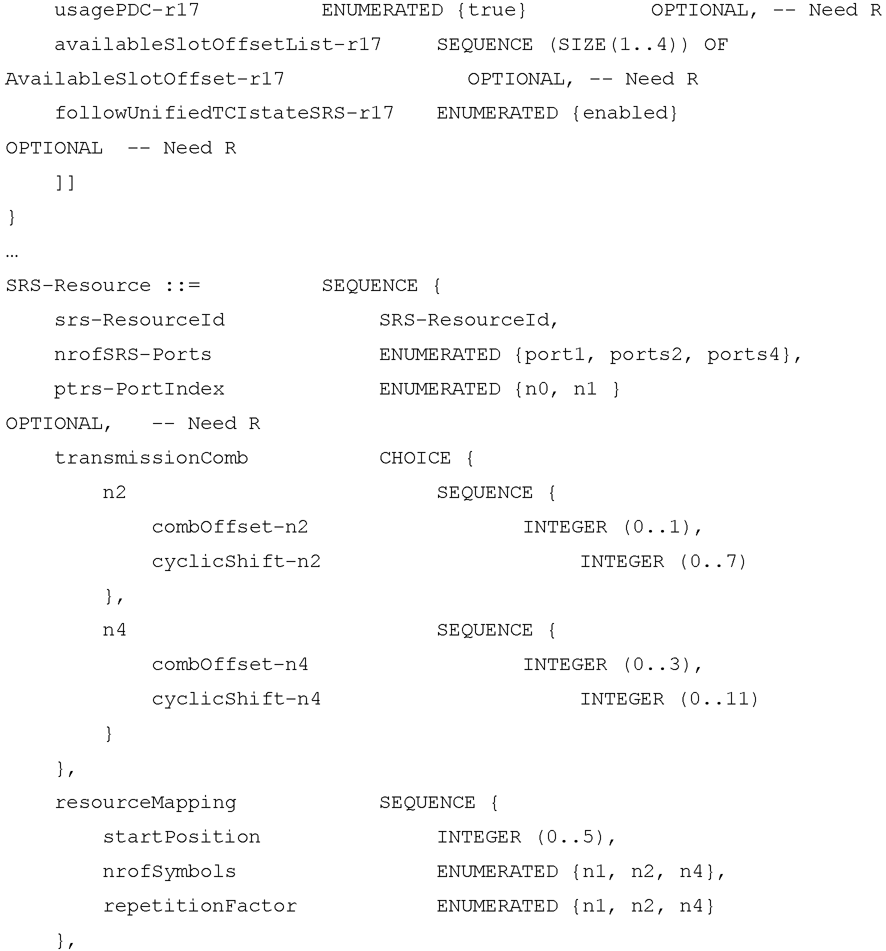

The 38.212 defines the SRS request as follows:

| Value of SRS request field | **Triggered aperiodic SRS resource set(s) for DCI format 0_1, 0_2, 1_1, 1_2, and 2_3 configured with higher layer parameter *srs-TPC-PDCCH-Group* set to 'typeB'** | **Triggered aperiodic SRS resource set(s) for DCI format 2_3 configured with higher layer parameter *srs-TPC-PDCCH-Group* set to 'typeA'** |
|---|---|---|
| 00 | No aperiodic SRS resource set triggered | No aperiodic SRS resource set triggered |
| 01 | SRS resource set(s) configured by *SRS-ResourceSet* with higher layer parameter *aperiodicSRS-ResourceTrigger* set to 1 or an entry in *aperiodicSRS-ResourceTriggerList* set to 1 | SRS resource set(s) configured with higher layer parameter *usage* in *SRS-ResourceSet* set to *'antennaSwitching'* and *resourceType* in *SRS-ResourceSet* set to 'aperiodic' for a 1^{st} set of serving cells configured by higher layers |
| | SRS resource set(s) configured by *SRS-PosResourceSet* with an entry in *aperiodicSRS-ResourceTriggerList* set to 1 when triggered by DCI formats 0_1, 0_2, 1_1, and 1_2 | |
| 10 | SRS resource set(s) configured by *SRS-ResourceSet* with higher layer parameter *aperiodicSRS-ResourceTrigger* set to 2 or an entry in *aperiodicSRS-ResourceTriggerList* set to 2 | SRS resource set(s) configured with higher layer parameter *usage* in *SRS-ResourceSet* set to *'antennaSwitching'* and *resourceType* in *SRS-ResourceSet* set to 'aperiodic' for a 2^{nd} set of serving cells configured by higher layers |
| | SRS resource set(s) configured by *SRS-PosResourceSet* with an entry in *aperiodicSRS-ResourceTriggerList* set to 2 when triggered by DCI formats 0_1, 0_2, 1_1, and 1_2 | |
| 11 | SRS resource set(s) configured by *SRS-ResourceSet* with higher layer parameter *aperiodicSRS-ResourceTrigger* set to 3 or an entry in *aperiodicSRS-ResourceTriggerList* set to 3 | SRS resource set(s) configured with higher layer parameter *usage* in *SRS-ResourceSet* set to *'antennaSwitching'* and *resourceType* in *SRS-ResourceSet* set to 'aperiodic' for a 3^{rd} set of serving cells configured by higher layers |
| | SRS resource set(s) configured by *SRS-PosResourceSet* with an entry in *aperiodicSRS-ResourceTriggerList* set to 3 when triggered by DCI formats 0_1, 0_2, 1_1, and 1_2 | |

Higher peak data rate for UL could play a significant role in short-range applications such as home entertainment, video surveillance/monitoring in industrial/healthcare/safety, IAB, and other applications where devices power/form-factor/cost are not as stringent as in traditional handheld devices. UL transmission with >4Tx is useful to bridge the gap between DL and UL spectral efficiency, in both FR1 and FR2. Hence, there is a desire to develop methods and/or signalling solutions to overcome this problem for Rel-18 or beyond releases.

The one of objectives of Rel-18 NR MIMO Evo DL UL is to discuss and define how to provide specification support for simultaneous multi-panel UL transmission with 2 panels (STx2P) as follows:
1. Study, and if justified, specify UL DMRS, SRS, SRI, and TPMI (including codebook) enhancements to enable 8 Tx UL operation to support 4 and more layers per UE in UL targeting CPE/FWA/vehicle/Industrial devices.

In accordance with an approach, a UE can be configured with single UL SRS resource in an SRS resource set with usage 'codebook' or 'antennaSwitching' for 8TX PUSCH with 8 ports with TDM factor s >1, s=2, where a subset of antenna ports are mapped over m OFDM symbols (≥ 2) in slot where each of m symbols/subsets consist of 8/s different antenna ports.

The Rel-19 aims to study and specify UE initiated beam reporting that could enable faster link switch, provide network additional information for scheduling and reduce overhead by enabling UE beam reporting when there is actually need for the reporting (to avoid periodic reporting, to avoid wasted pinging by gNB using aperiodic reporting).

The SRS transmission configuration is provided by a network (NW) using RRC signaling (and additionally MAC CE for changing the spatial relation RS for the configured SRS). Triggering is further done using a DCI message. Typically, the resource configurations are done based on the DL RSRP reports wherein the UE is configured to report DL RS (+ e.g. RSRP), but this may not give enough information or specific information for network e.g. how the UE sees the potential UL candidate directions.

In the following, an enhanced method for SRS reporting will be described in more detail, in accordance with various embodiments.

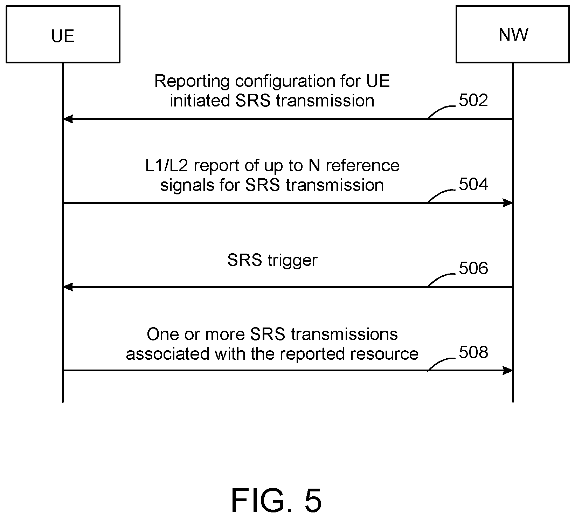

Fig. 5 shows as a signaling diagram messages exchanged between the UE and the network during the SRS procedure, in accordance with an embodiment. The network, for example a gNB, sends 502 a reporting configuration for the UE initiated SRS transmission. As a response to the configuration message, the UE sends 504 an L1/L2 (Layer 1/Layer 2) report of up to N (downlink) reference signals for SRS transmission. The network sends 506 an SRS trigger message to inform the UE to start the SRS transmission procedure. The SRS trigger message may be a specific message or it may comprise an indication specific for triggering transmission of at least one SRS associated with the at least one UE reported reference signal(s) (DL RS). As a result of the reporting procedure (e.g. the downlink reference signal reporting procedure for SRS transmissions) the UE sends 508 one or more SRS transmissions associated with the reported resource.

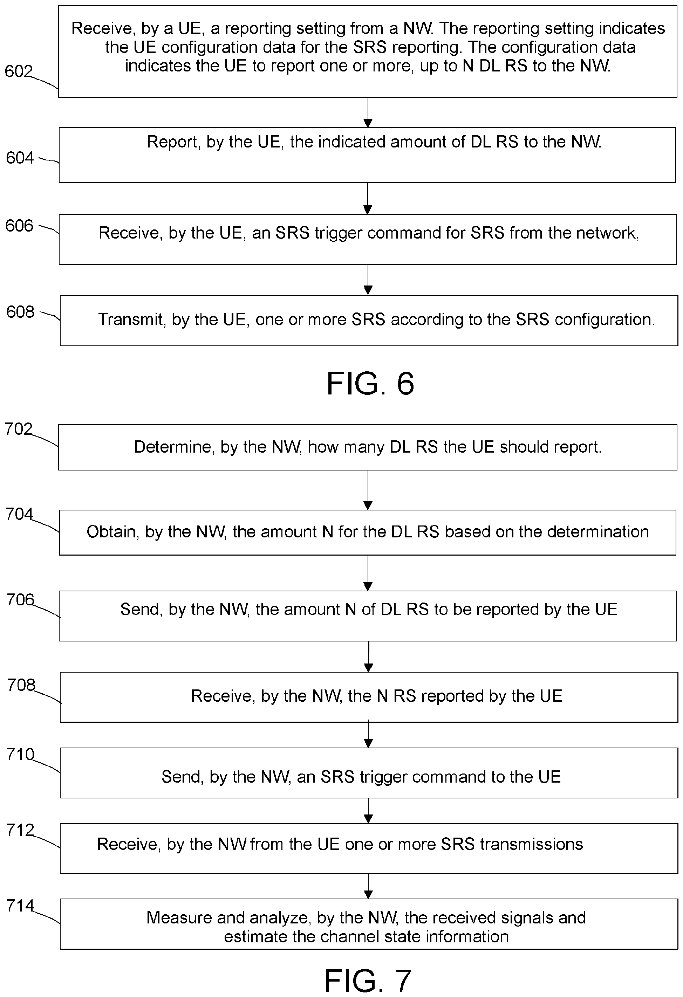

Fig. 6 shows as a flow diagram some steps for the UE in connection with the SRS procedure. The UE receives 602 a reporting setting from the NW. The reporting setting indicates the UE configuration data for reporting the one or more resources (DL RS) for at least one SRS transmission. The configuration data indicates the UE to report one or more, up to N DL RS to the NW, i.e., an indication of the amount of downlink reference signals. In one alternative, the configuration data may indicate the UE to report SRS identifiers that identify SRS resource(s) or resource set(s). The reported SRS resources may be used as a reference for triggered SRS transmission. The N is a positive integer configured (e.g. RRC or MAC CE or DCI) or indicated by the NW. The UE then reports 604 (up to) the configured/indicated amount of DL RS to the NW. In other words, the UE reports different downlink reference signals so that the amount is less than or equal to the indicated amount N. When the UE receives 606 an SRS trigger command for SRS transmission from the network, the UE transmits 608 one or more SRS according to the SRS configuration. In an example, when the UE receives 606 an SRS trigger command for SRS transmission from the network, the UE transmits 608 one or more SRS according to the SRS configuration and associating the one or more transmitted SRS resources/resource sets with the one or more reported reference signals (DLRS / DL resources).

Fig. 7 shows as a flow diagram some steps for the NW in connection with the SRS procedure. The network element, such as the gNB, determines 702 how many DL RS the UE should report. Based on the determination the NW obtains 704 (up to) the amount N for the DL RS and sends 706 the amount N of DL RS to be reported by the UE. When the NW received 708 the N RS reported by the UE, the NW sends 710 an SRS trigger command to the UE. The NW receives 712 from the UE one or more SRS transmissions. The NW may then measure and analyze 714 the received signals and estimate the channel state information (CSI) by comparing the received SRS with the known reference signal. The NW may also evaluate various parameters, such as the path loss, propagation delay(phase delay), and received signal strength, to understand the current radio environment and channel conditions between the gNB and the UE.

In the following, some alternatives and other embodiments will be described.

In accordance with an embodiment, the UE may be configured to trigger one or more SRS transmissions associated with one or more UE reported resources. In one example a reporting setting may be configured for the UE wherein the reporting setting the UE is configured to report up to N (or equal to N) DL RS to the network (e.g. BS/gNB). Once the UE has reported the N RS to the network the UE is assumed/expected to be capable to transmit SRS associated with the at least one reported DL RS upon receiving a downlink indication. In one example, the downlink indication may be DCI message comprising a trigger or an indication to transmit SRS according to the at least one reported resource. In some examples, the downlink indication may be a DCI message comprising an SRI (SRS resource/request indicator) field, wherein a value of the SRI may refer to the SRS resource(s) associated with the UE reported resources. It may also be possible to determine the capability on the basis that the UE has reported the N RS to the network i.e. the number of reported RS may be the indication. In some examples, the reporting format may comprise of N fields (for reporting up to the N reference signals) and UE may desire to report up to M (M<N) resources. In some examples to report less than N (or M where M<N) the UE repeats a reported resource indicator value (e.g. if SSBRI, SSB resource indicator, are reported the UE may repeat the value of the reported SSBRI). In some examples the reporting of DL RS for SRS transmission may comprise of resource indicator and associated/measured RSRP value. In some examples if the UE reports less than N (e.g. M<N) it may set the one or more RSRP values for resources to be a low value or a non-valid value for the reporting configuration. The UE may indicate capability (using e.g. RRC signaling) for a time period after which it is capable for performing SRS transmission associated with the UE reported resources.

Upon receiving the SRS trigger command (e.g. DCI) for SRS transmissions associated with the UE reported (DL) resources, the UE transmits the one or more SRS according to the SRS configuration by using the reported one or more RS as a spatial relation RS for the triggered SRS transmission.

According to an embodiment, the SRS resources used for triggering SRS transmissions associated with the UE reported (DL) resources may be configured specifically for this operation (i.e. dedicated configuration / separate configuration).

Alternatively, the UE may be configured to overwrite current spatial relation RS/apply alternative spatial relation RS for existing SRS configuration using the UE reported RS for at least one transmission (When the transmission of at least on SRS is indicated/triggered by the network).

According to an embodiment, the UE may indicate in a periodic/semi persistent report that the report now includes event triggered information instead of configured information.

According to an embodiment, the reporting described herein may refer to L1 reporting on PUCCH or PUSCH, or it may refer to the MAC CE reporting. The UE reporting for the DL RS to be used as a reference/spatial relation for the at least one SRS transmission may be carried out using L1 reporting or MAC CE.

According to an embodiment, the association of a SRS transmission with DL RS/downlink resource/reference signal may comprise of using the resource/reference as spatial reference/relation RS for the SRS transmission. As an example (of spatial relation or spatial relation RS) the UE may apply the same spatial filter (e.g. a beam /beam pattern/antenna pattern/radiation pattern/antenna configuration/panel) used for receiving the DL RS for transmission of the associated SRS.

According to an embodiment, a DCI format (existing with a new field or a new format) may include a field indicating a triggering command for SRS transmission associated with UE reported resources. In one example, the field may be a new field in a DCI which indicates that the triggered SRS transmissions (by an existing field, the SRI field) shall use the reported DL RS as spatial relation RS for the triggered transmission.

According to an embodiment, the UE may be configured with one or more SRS resource (set) configurations, each resource is associated with one or more reported DL RS. As an example, a first reported DL RS is associated with a first configured SRS resource set, a second reported DL RS is associated with a second configured SRS resource set, etc.

According to an embodiment, the DCI format triggering the SRS transmission associated with UE reported resources may indicate the DL RS to be used as a spatial relation RS by referring it using an index which points to the reporting order of the RS. Based on the indication the UE applies the indicated DL RS by the DCI as a spatial relation RS for the triggered SRS. This may be signaling in a form of a bitmap, i.e., the bit position in a bitmap refers to the reported index of the resource. For example, the first bit refers to the first reported resource, the second bit refers to the second reported resource, etc. This might allow triggering SRS for one or more resources.

Alternatively, a bitfield may comprise a value pointing to the reported index. For example, a first value ('00') points to the first resource index in the report, a second value '01' to the second reported resource index, etc.

According to an embodiment, if the DCI triggers more than one SRS transmission the reported DL RS by UE are mapped as a spatial relation RS for the SRSs in ascending order for the SRS resource set ID and the RS indicated by bit position. In one embodiment, the UE may be configured with one or more SRS resource set configurations, each resource is associated with one or more reported DL RS. As an example, the first reported DL RS is associated with a first configured SRS resource set, the second reported DL RS is associated with a second configured SRS resource set.

In one embodiment, a field in a downlink message (e.g. DCI) may indicate the UE to trigger a measurement and reporting (e.g. aperiodic) event for UE to report resources for SRS transmission. The UE may select up to N reported resources, e.g., based DL RS RSRP, uplink information such as MPE (maximum permissible emission) status i.e. whether the UE is required to reduce power for UL transmission.

In one embodiment, the UE may be configured to trigger an indication, e.g., SR that an event has occurred, the event comprising indication that the UE prefers to report at least one candidate DL RS for the SRS transmission.

In one embodiment, the UE may provision the event triggered reporting for candidate SRS spatial relation RS in a form of a MAC CE.

In one further embodiment, the mapping/association of reported DL RS by the UE may be, or may be configured to be, mapped according to, e.g., the following example ways.

In one embodiment, each configured UL SRS resource set is assumed to be associated with one UE TX antenna panel at the UE-side.

In one example, the spatial relation RS is for SRS resources in a resource set.

In one embodiment, the spatial relation RS is for a (single) SRS resource in an SRS resource set. I.e., if two spatial relation RSs are used they refer to SRS resources in different sets.

In one embodiment the reporting setting of DL RS for SRS transmission may be configured for multiple resource sets, wherein the resource set may be mapped to CORESETpoolindex and/or first or second indicated TCI State (i.e. per TRP in a multi-TRP (mTRP) scenario). In this setting the UE determines to report at least one resource from the first resource set, and at least one resource from the second resource set. The resources of the resource sets are considered by the UE to map to different TRPs.

In one embodiment the UE may be configured to trigger event-based reporting of up to N downlink reference signals and/or select up to N downlink reference signals based on at least one criterion or condition. As an example, the criterion or condition to trigger event-based reporting and/or select downlink reference signals for reporting may be based on observed measurements or uplink status determined based on the DL RS or that UE has performed at least one estimate (e.g., path loss) or measurement using at least one DL RS selected for reporting. As an example, the criterion or condition to trigger event-based reporting and/or select downlink reference signals for reporting may be based on MPE status (i.e., power reduction-based condition). In another example the criterion or condition to trigger event-based reporting and/or select downlink reference signals for reporting may be based on RSRP measurements. In one example the RSRP measurements-based criterion can be difference between reference DL RS (e.g., DL RS that is currently used as spatial relation for UL transmission) and a measured DL RS. In another example the UE may determine to report DL RS suitable for spatial relation for SRS transmission based on DL RS quality (e.g., RSRP level). In another example the criterion or condition to trigger event-based reporting and/or select downlink reference signals for reporting may be based on pathloss measurement status. As an example, if the UE has performed pathloss measurements on DL RS it may select the RS for reporting or trigger an event as described herein. Any of the above criteria may be used as a single criterion or in combination with or more other criteria as described.

In one embodiment, the UE may determine the reported resource and/or event based on the observed MPE status for the resources in the resource set. The UE determines to report DL RS that are cleared from the MPE limitations, i.e., resources for which no maximum power backoff is applied or applied less than a threshold.

The UE may be programmed to perform event triggering of reporting order based on the observed MPE status on the RS associated with current UL transmission.

The UE triggers event-based reporting if the power back off to be applied for current UL transmission on first or second indicated TCI State is higher than threshold (e.g. if any, or X dB backoff is to be applied).

The UE may be programmed to perform event triggering of reporting based on the measured RSRP difference with respect to the current DL RS used as a spatial relation for the first or second configured uplink transmission (first and second in mTRP, only the first in a single TRP). As an example, if at least one measured RSRP value is higher for DL RS not currently used as spatial relation for UL transmission.

The UE may be programmed to perform event triggering of reporting based on the measured RSRP value, i.e. the UE N DL RS with highest measured RSRP.

The UE may be programmed to perform reporting for DL RS (or event triggered reporting) based on whether the pathloss measurement has been made for the measured DL RS.

In one embodiment, the UE may determine to trigger an event for reporting DL RS for SRS transmission, if it determines that at least one DL RS can be detected/received on a primary antenna panel and the primary antenna panel is not configured for UL transmission currently. Alternatively, if the primary antenna panel detects DL RS with an DLRS_RSRP_primary + offset > DLRS_RSRP_secondary, the UE may determine to trigger event-based reporting for reporting DL RS for SRS transmission. The offset is set by the UE to a value specific for the imbalance of radiated power capability between secondary/primary panel, and the DLRS_RSRP_secondary is the RSRP value of the DL RS received using a secondary panel and that is a current spatial relation RS for UL transmission. In one example, the offset value may be expressed in dBs.

The UE is considered to have a primary antenna panel if there are more than one panel at the UE with different capability to produce/emit/radiate power. For example, the primary antenna panel may be capable of emitting 4,5 dB more power on UL transmission.

In one embodiment, the UE may determine to report DL RS resources (candidates for SRS transmission) that map to (are associated with) different antenna panels at the UE side.

As an example, the UE determines to select to report DL RS resources in a manner that the first reported DL RS maps to the first antenna panel, the second reported DL RS maps to the second antenna panel etc. In other words, the UE reports the downlink reference signals in a manner that the order of the reported downlink reference signals corresponds with the order of the antenna panels.

An apparatus, such as a UE, according to an aspect comprises means for receiving a configuration from a network including associating an amount N of downlink reference signals respectively with N sounding reference signals; means for determining up to N downlink reference signals to be reported based on at least one criterion; means for reporting up to N downlink reference signals to the network, wherein a downlink reference signal reported to the network is indicative to the network that the apparatus is capable to transmit the sounding reference signal associated with the reported downlink reference signal; means for receiving a command to trigger sounding reference signal transmission; and means for transmitting the up to N sounding reference signals respectively associated with the reported up to N downlink reference signals to the network in response to receiving the command.

According to an embodiment, the apparatus may comprise means for determining a maximum permissible emission status for resources in a resource set.

According to an embodiment, the means for reporting are configured to report such downlink reference signals for which no maximum power backoff is applied or is applied less than a first threshold.

According to an embodiment, the apparatus is configured to perform event triggering of reporting order based on an observed maximum permissible emission status on a reference signal associated with a current uplink transmission.

According to an embodiment, said means for receiving a configuration are configured to receive at least a first transmission coordination indication state or a second transmission coordination indication state, further wherein the apparatus is configured to trigger the event-based reporting if a power back off to be applied for the current uplink transmission on the first indicated transmission coordination indication state or the second indicated transmission coordination indication state is higher than a second threshold.

According to an embodiment, the apparatus may comprise means for measuring reference signal received power; and means for comparing a reference signal received power of the current downlink reference signal with another configured downlink reference signal.

According to an embodiment, the apparatus is configured to trigger the event-based reporting based on the measured reference signal received power value.

According to an embodiment, the apparatus is configured to trigger the event-based reporting based on whether a pathloss measurement has been performed for a measured downlink reference signal.

According to an embodiment, the apparatus comprises at least a primary antenna panel and a secondary antenna panel; wherein the apparatus is configured to trigger the event-based reporting based on determining that at least one downlink reference signal can be detected or received on the primary antenna panel and the primary antenna panel is not currently configured for uplink transmission is configured to trigger the event-based reporting based on whether a pathloss measurement has been performed for a measured downlink reference signal.

According to an embodiment, the apparatus comprising at least a primary antenna panel and a secondary antenna panel is configured to trigger the event-based reporting if a difference between reference signal received power of a downlink reference signal received by the primary antenna panel and reference signal received power of a downlink reference signal received by the secondary antenna panel is higher than an offset value.

According to an embodiment, the apparatus comprises comprising a plurality of antenna panels, wherein different downlink reference signals are mapped to respective different antenna panels of the plurality of antenna panels.

According to an embodiment, the apparatus is configured to report the downlink reference signals in a manner that an order of the reported downlink reference signals corresponds with an order of the antenna panels.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

An apparatus according to a further aspect comprises at least one processor and at least one memory storing instructions such as computer-readable, computer-executable software that, when executed by the at least one processor, cause the apparatus at least to perform receiving a configuration from a network including associating an amount N of downlink reference signals respectively with N sounding reference signals; determining up to N downlink reference signals to be reported based on at least one criterion; reporting up to N downlink reference signals to the network, wherein a downlink reference signal reported to the network is indicative to the network that the apparatus is capable to transmit the sounding reference signal associated with the reported downlink reference signal; receiving a command to trigger sounding reference signal transmission; and transmitting the up to N sounding reference signals respectively associated with the reported up to N downlink reference signals to the network in response to receiving the command.

Such apparatuses may comprise e.g. the functional units disclosed in any of the Figs. 1-3 for implementing the embodiments.

A further aspect relates to a computer program product, stored on a non-transitory memory medium, comprising computer program code, which when executed by at least one processor, causes an apparatus at least to perform receiving a configuration from a network including associating an amount N of downlink reference signals respectively with N sounding reference signals; determining up to N downlink reference signals to be reported based on at least one criterion; reporting up to N downlink reference signals to the network, wherein a downlink reference signal reported to the network is indicative to the network that the apparatus is capable to transmit the sounding reference signal associated with the reported downlink reference signal; receiving a command to trigger sounding reference signal transmission; and transmitting the up to N sounding reference signals respectively associated with the reported up to N downlink reference signals to the network in response to receiving the command.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or processor or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiments of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
means for receiving a configuration from a network including associating an amount N of downlink reference signals respectively with N sounding reference signals;
means for determining up to N downlink reference signals to be reported based on at least one criterion;
means for reporting up to N downlink reference signals to the network, wherein a downlink reference signal reported to the network is indicative to the network that the apparatus is capable to transmit the sounding reference signal associated with the reported downlink reference signal;
means for receiving a command to trigger sounding reference signal transmission; and
means for transmitting the up to N sounding reference signals respectively associated with the reported up to N downlink reference signals to the network in response to receiving the command.

2. The apparatus according to claim 1 comprising:
means for determining a maximum permissible emission status for resources in a resource set.

3. The apparatus according to claim 2, wherein the means for reporting are configured to report such downlink reference signals for which no maximum power backoff is applied or is applied less than a first threshold.

4. The apparatus according to claim 2 or 3 configured to perform event triggering of reporting order based on an observed maximum permissible emission status on a reference signal associated with a current uplink transmission.

5. The apparatus according to claim 4, wherein said means for receiving a configuration are configured to receive at least a first transmission coordination indication state or a second transmission coordination indication state,
further wherein the apparatus is configured to trigger the event-based reporting if a power back off to be applied for the current uplink transmission on the first indicated transmission coordination indication state or the second indicated transmission coordination indication state is higher than a second threshold.

6. The apparatus according to any of the claims 1 to 5 comprising:
means for measuring reference signal received power; and
means for comparing a reference signal received power of the current downlink reference signal with another configured downlink reference signal.

7. The apparatus according to claim 6, wherein the apparatus is configured to trigger the event-based reporting based on the measured reference signal received power value.

8. The apparatus according to any of the claims 1 to 7 configured to trigger the event-based reporting based on whether a pathloss measurement has been performed for a measured downlink reference signal.

9. The apparatus according to any of the claims 1 to 8 comprising at least a primary antenna panel and a secondary antenna panel;
wherein the apparatus is configured to trigger the event-based reporting based on determining that at least one downlink reference signal can be detected or received on the primary antenna panel and the primary antenna panel is not currently configured for uplink transmission.

10. The apparatus according to any of the claims 1 to 8 comprising at least a primary antenna panel and a secondary antenna panel;
wherein the apparatus is configured to trigger the event-based reporting if a difference between reference signal received power of a downlink reference signal received by the primary antenna panel and reference signal received power of a downlink reference signal received by the secondary antenna panel is higher than an offset value.

11. The apparatus according to any of the claims 1 to 10 comprising a plurality of antenna panels;
wherein different downlink reference signals are mapped to respective different antenna panels of the plurality of antenna panels.

12. The apparatus according to claim 11, wherein the apparatus is configured to report the downlink reference signals in a manner that an order of the reported downlink reference signals corresponds with an order of the antenna panels.

13. A method comprising:
receiving a configuration from a network including associating an amount N of downlink reference signals respectively with N sounding reference signals;
determining up to N downlink reference signals to be reported based on at least one criterion;
reporting up to N downlink reference signals to the network, wherein a downlink reference signal reported to the network is indicative to the network that the apparatus is capable to transmit the sounding reference signal associated with the reported downlink reference signal;
receiving a command to trigger sounding reference signal transmission; and
transmitting the up to N sounding reference signals respectively associated with the reported up to N downlink reference signals to the network in response to receiving the command.

14. An apparatus comprising:
at least one processor; and
at least one memory storing instructions that, when executed by the at least one processor, cause the apparatus at least to perform the method of claim 13.

15. The apparatus according to claim 14, wherein executing said instructions, stored in the at least one memory, by the at least one processor, cause the apparatus at least to perform:
determining a maximum permissible emission status for resources in a resource set.
